# EUROPEAN PATENT SPECIFICATION

(11) **EP 2 939 887 B1**
(45) Date of publication and mention of the grant of the patent: **22.08.2018**
(21) Application number: 13868057.4
(22) Date of filing: 25.12.2013
(51) Int. Cl.: B60S 1/52, B60S 1/60

(54) **WASHING DEVICE FOR VEHICLE**
WASCHVORRICHTUNG FÜR EIN FAHRZEUG
DISPOSITIF DE NETTOYAGE POUR VÉHICULE

(30) Priority: 26.12.2012 JP 2012282386; 26.12.2012 JP 2012282387
(43) Date of publication of application: 04.11.2015
(73) Proprietor: Koito Manufacturing Co., Ltd., Minato-ku Tokyo 108-8711 (JP)
(72) Inventor: BABA Junji, Shizuoka-shi Shizuoka 424-8764 (JP); ICHIKAWA Yasuhiro, Shizuoka-shi Shizuoka 424-8764 (JP); KUBOTA Akinobu, Shizuoka-shi Shizuoka 424-8764 (JP)
(74) Representative: Hoffmann Eitle
(86) International application number: PCT/JP2013/084696
(87) International publication number: WO 2014/104108

(56) References cited:
- DE-A1- 19 833 143
- JP-A- 2012 040 916
- JP-A- 2012 040 916

## Description

### Technical Field

The present invention relates to a vehicle washer.

### Prior Art Document

### Patent Document

Patent Document 1: JP-A-63-201653U
Patent Document 2: JP-A-1-142359U
Patent Document 3: DE 198 33 143 A1, which discloses the preamble of claim 1.

### Background Art

There is a washer which projects partially from an opening formed in a body or a bumper of a vehicle for washing a surface of a cover of a vehicle lamp by jetting a washing fluid from a nozzle.

A washer is known which includes a nozzle, a nozzle holder (a nozzle case) which holds the nozzle, a coil spring and a valve (for example, refer to Patent Document 1 and Patent Document 2). A nozzle which jets a washing fluid is provided at a distal end side of the nozzle. The nozzle holder holds the nozzle. The coil spring is provided in an interior of the nozzle holder and extends and contracts in a direction in which the washing fluid flows. The valve is attached to the coil spring and moves together with the coil spring.

In the washer configured in this way, when the washing fluid is supplied to the nozzle holder, the pressure of the washing fluid is increased whereby the coil spring is compressed. Then, the valve moves together with the coil spring, whereby an outlet port which is closed by the valve is opened, and the washing fluid is let out into an interior of the nozzle holder to be jetted out of the nozzle.

Patent Document 3 is related to the preamble of claim 1.

### Summary of the Invention

### Problem that the Invention is to Solve

In the washer described in Patent Document 1, however, when the coil spring is compressed whereby the valve is caused to move to open the outlet port, the washing fluid is caused to flow into the flow path with a small cross-sectional to be jetted from the nozzle to the exterior. In addition, in the washer described in Patent Document 2, when the coil spring is compressed whereby the valve is caused to move to open the outlet port, the washing fluid is caused to enter from an outer circumferential side into an interior of the coil spring, and the washing fluid is then caused to flow through the interior of the coil spring to be jetted from the nozzle to the exterior.

In this way, the washers described in Patent Documents 1, 2, the flowing resistance is imparted to the washing fluid by the flow path with the small cross-sectional or the resisting force is imparted to the washing fluid by the coil spring. This causes a pressure loss in the washing fluid which flows through the washer, which reduces the jetting pressure of the washing fluid which is jetted from the nozzle, leading to a problem that the washing capability of the washing fluid is reduced.

Then, a washer of this invention is made to solve a problem of how to ensure a high jetting pressure by reducing the flowing resistance to a washing fluid.

### Means for Solving the Problem

According to the invention, with a view to solving the problem described above, there is provided a vehicle washer including a joint having a flow path through which a washing fluid supplied from a supply tank and an outlet port from which the washing fluid is let out, a nozzle holder that the joint is connected and then the washing fluid which is let out from the outlet port of the joint flows in the interior of the nozzle holder, a coil spring which is disposed in an interior of the nozzle holder and which is compressed in a direction in which the washing fluid flows, a nozzle which has a discharge port from which the washing fluid is discharged to an exterior and which is held by the nozzle holder, and a valve which is attached to the coil spring and which moves together with the coil spring to open and close the discharge port of the joint, wherein a holder flow path through the washing fluid flows is formed on an outer side of the coil spring in the interior of the nozzle holder.

It is easy to secure the holder flow path with a large cross-sectional on the outer side of the coil spring in the interior of the nozzle holder. It is difficult for a pressure loss to be produced because a resisting force is imparted to the washing fluid by a space with a small cross-sectional or a resisting force is not imparted to the washing fluid by the coil spring, and therefore, it is possible to ensure a high jetting pressure at which the washing fluid is jetted from the nozzle.

In the vehicle washer of the invention, a plurality of communication holes which are connected to the holder flow path to cause the washing fluid to flow from the holder flow path towards the nozzle are formed in the nozzle holder.

Since the washing fluid is caused to flow through the holder flow path in an ensured fashion by the communication holes to be jetted from the nozzle, it is possible to reduce the flowing resistance against the washing fluid which flows through the interior of the nozzle holder in an ensured fashion.

In the vehicle washer of the invention, the plurality of communication holes are each be formed into an arc shape and be positioned apart from each other in a circumferential direction.

The flow rate of the washing fluid and the pressure of the washing fluid in the nozzle holder can be made uniform, and the washing fluid can flow and be jetted stably.

In the vehicle washer of the invention, a guiding surface may be formed on the valve so as to guide the washing fluid into the holder flow path.

The construction of the washer can be simplified in a secured fashion without involving an increase in the number of parts, whereby the washing fluid is allowed to flow in the holder flow path in an ensured fashion.

In the vehicle washer of the invention, a guiding surface may be formed on the joint so as to guide the washing fluid into the holder flow path.

The construction of the washer can be simplified in a secured fashion without involving an increase in the number of parts, whereby the washing fluid is allowed to flow in the holder flow path in an ensured fashion.

Additionally, according to the invention, there is provided a vehicle washer including a joint having a flow path through which a washing fluid supplied from a supply tank and an outlet port from which the washing fluid is let out, a nozzle holder that the joint is connected and then the washing fluid which is let out from the outlet port of the joint flows in the interior of the nozzle holder, a coil spring which is disposed in an interior of the nozzle holder and which extends and contracts in a direction in which the washing fluid flows, a nozzle which has a discharge port from which the washing fluid is discharged to an exterior and which is held by the nozzle holder, and a valve which is attached to the coil spring and which moves together with the coil spring to open and close the discharge port of the joint, wherein a valve flow path through which the washing fluid flows is formed outside the valve when the valve moves to open the outlet port, wherein a holder flow path is formed in an interior of the nozzle holder which continues to the valve flow path and through which the washing fluid flows to the nozzle, and wherein a cross-sectional of the washing fluid in the holder flow path is made greater than a cross-sectional of the valve flow path.

The high pressure of the washing fluid in the valve flow path is ensured to hold the outlet port open, and the flowing resistance against the washing fluid in the holder flow path is reduced to a small level to ensure a sufficient jetting pressure and jetting quantity of the washing fluid which is jetted from the nozzle, whereby the washing fluid is allowed to flow stably.

In addition, the stable cross-sectional of the valve flow path can be secured and the stable cross-sectional of the holder flow path can be secured, whereby it is possible to ensure a sufficient jetting pressure and jetting quantity of the washing fluid which is jetted from the nozzle.

In the vehicle washer of the invention, the valve flow path may be formed in an interior of the joint, and wherein the cross-sectional areas of the valve flow path and the holder flow path may be made to differ in size from each other by a thickness of the joint.

The cross-sectional areas of the valve flow path and the holder flow path can be made to differ from each other without involving an increase in the number of parts, and the construction of the washer can be simplified in a secured fashion without involving an increase in the number of parts, whereby the washing fluid is allowed to flow in an ensured fashion.

In the vehicle washer of the invention, a guiding surface may be formed on the joint which is inclined to an outer circumferential side towards a downstream side in a direction in which the washing fluid flows so as to guide the washing fluid from the valve flow path to the holder flow path.

The construction of the washer can be simplified in a secured fashion without involving an increase in the number of parts, whereby the washing fluid is allowed to flow in the holder flow path in an ensured fashion. Additionally, it is difficult for a vortex flow of the washing fluid to be produced in the vicinity of the guiding surface, whereby the washing fluid is allowed to flow well in a secured fashion.

In addition, since the change in flow rate when the washing fluid is caused to flow from the valve flow path to the holder flow path becomes moderate, the valve can be held in a predetermined position in a stable fashion when the washing fluid flows.

In the vehicle washer of the invention, a guiding surface may be formed on the valve so as to guide the washing fluid from the valve flow path to the holder flow path.

The construction of the washer can be simplified in a secured fashion without involving an increase in the number of parts, whereby the washing fluid is allowed to flow in the holder flow path in an ensured fashion.

In addition, since the change in flow rate when the washing fluid is caused to flow from the valve flow path to the holder flow path becomes moderate, the valve can be held in a predetermined position in a stable fashion when the washing fluid flows. Advantage of the Invention

According to the vehicle washer of the invention, it is possible to secure a high jetting pressure by reducing a flowing resistance against a washing fluid.

### Brief Description of Drawing

Fig. 1 is a sectional view of a washer according to an embodiment of the invention, which shows a state in which the washer is attached to a vehicle body or a bumper.
Fig. 2 is an exploded perspective view of the washer.
Fig. 3 is a sectional view of the washer.
Fig. 4 is an enlarged sectional view showing a valve flow path and a holder flow path through which a washing fluid flows.
Fig. 5 is a sectional view showing a flow path of the washing fluid.

### Mode for Carrying out the Invention

Hereinafter, referring to the accompanying drawings, an example of a vehicle washer according to an embodiment of the invention will be described.

Although the vehicle washer will be described as being applied to a washer for a vehicle lamp, the vehicle washer of this embodiment is not limited to the washer for the vehicle lamp and hence can be used widely as washers for various vehicle devices provided on a vehicle including a vehicle body, a window, a mirror and the like.

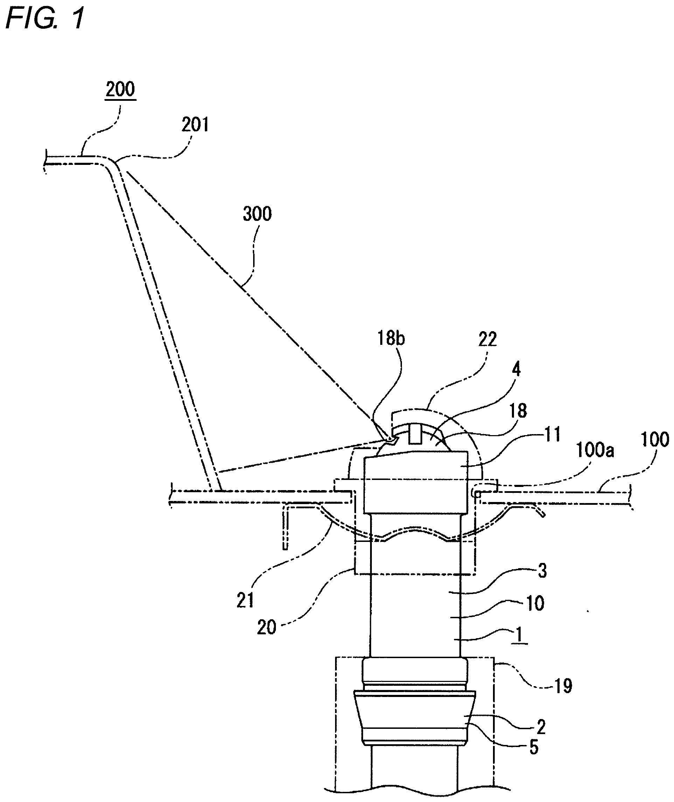

As shown in Fig. 1, a washer 1 has a joint 2, a nozzle holder 3 and a nozzle 4.

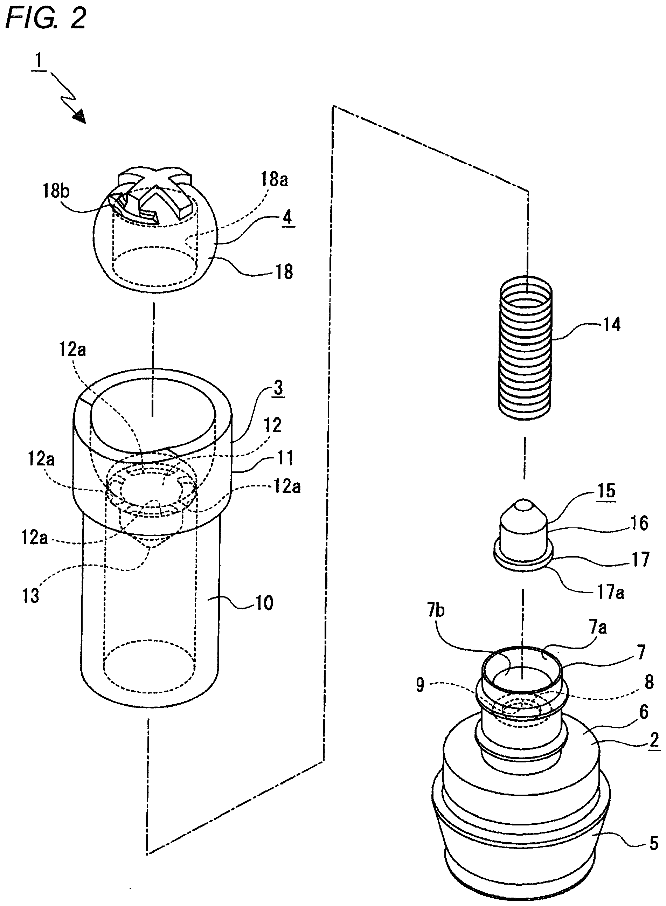

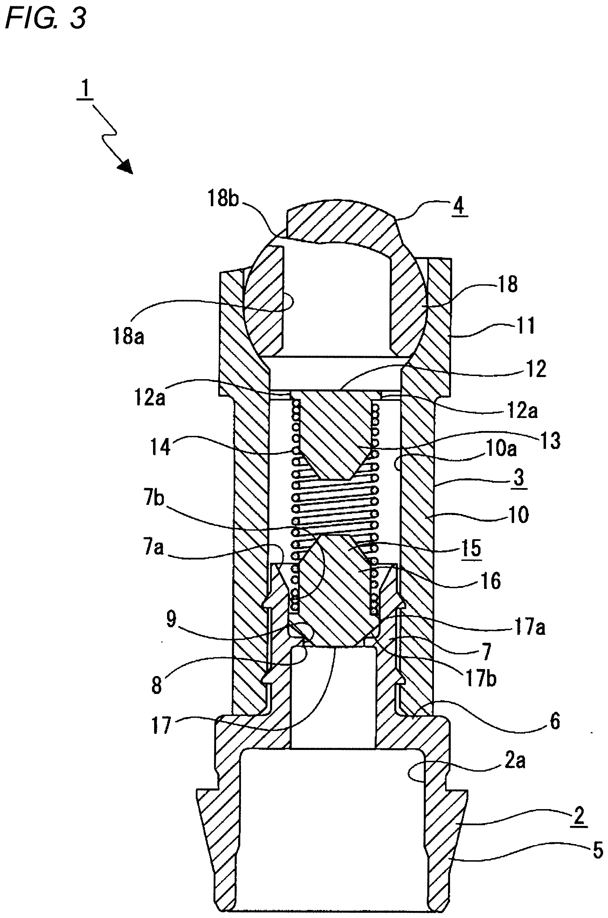

As shown in Fig. 2, the joint 2 has a first annular portion 5, a presser portion 6 and a second annular portion 7. The first annular portion 5 is an annular member having an axis which is directed in a direction in which a washing fluid flows (a vertical direction in Fig. 3). The presser portion 6 projects in an axial direction (towards the nozzle holder 3) of the first annular portion 5 from the first annular portion 5. The second annular portion 7 projects in the axial direction of the first annular portion 5 from an inner circumferential portion of the presser portion 6.

In the following description, the axial direction means a direction which follows the axis of the first annular portion 5. This axial direction also means the direction in which the washing fluid flows. Additionally, the circumferential direction means a circumferential direction which is centered at the axis of the first annular portion 5. In addition, an inner or inside means a radially inner position or space which is situated to be centered at the axis.

As shown in Fig. 3, an inner flange portion 8 is provided in an interior of the second annular portion 7 so as to project inwards from the second annular portion 7. An inner portion defined by the inner flange portion 8 is formed as an outlet port 9. A guiding surface 7a is formed at a distal end portion (an axial end portion at an end facing the nozzle 4) of the second annular portion 7 in such a way as to be inclined so that a diameter increases as it extends towards a distal end thereof. In other words, the guiding surface 7a is inclined so that the diameter increases towards a downstream side in the direction in which the washing fluid flows. A space defined from the inner flange portion 8 to the guiding surface 7a in the interior of the second annular portion 7 is formed as an inserting space 7b. A valve 15, which will be described later, is allowed to enter the inserting space 7b. When the outlet port 9 is opened, a space defined inside the guiding surface 7a is formed as a valve flow path 7c.

A space in an interior space of the joint 2 which is situated from the outlet port 9 to the first annular portion 5 is formed as a flow path 2a.

The nozzle holder 3 has a cylindrical base portion 10, a holding portion 11, a formed surface portion 12 which is provided in the interior of the base portion 10, and a supporting projecting portion 13 which projects from the formed surface portion 12. The holding portion 11 is provided at an axial end of the nozzle holder 3 so as to be continuous from the base portion 10.

The joint 2 is connected to the nozzle holder 3 by the second annular portion 7 of the joint 2 being press fitted in the base portion 10 of the nozzle holder 3. With the joint 2 connected to the nozzle holder 3, the presser portion 6 of the joint 2 is pressed against an end face of the base portion 10.

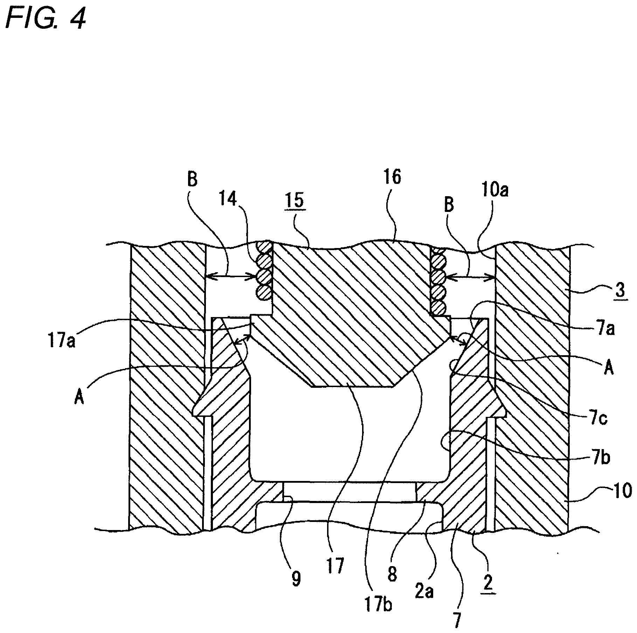

As shown in Fig. 4, an outer circumferential portion of an interior space of the base portion 10 is formed as a holder flow path 10a. A cross-sectional area A of the holder flow path 10a is made greater than a cross-sectional area B of the valve flow path 7c which is formed in the joint 2. When referred to herein, a cross-sectional area means a cross-sectional area of a flow path which appears in a plane which intersects the flowing direction of the washing fluid at right angles.

The holding portion 11 is formed into a substantially cylindrical shape with an outside diameter which is slightly greater than that of the base portion 10. An axial length of the holding portion 11 is made shorter than that of the base portion 10. As shown in Figs. 2 and 3, an inner surface of the holding portion 11 is formed into a curved surface.

The formed surface portion 12 is a plate-shaped portion which extends in a planar direction which intersects the axial direction of the nozzle holder 3 at right angles. The formed surface portion 12 is provided at an end portion of the base portion 10 which is situated to face the holding portion 11. A plurality of communication holes 12a are formed in an outer circumferential portion of the formed surface portion 12 in such a way as to be spaced apart from one another at equal intervals in a circumferential direction of the cylindrical holding portion 11. The communication holes 12a are each formed into an arc shape which is centered at an axis of the nozzle holder 3. A flowing space 18a in the nozzle 4, which will be described later, communicates with the holder flow path 10a of the base portion 10 via the communication holes 12a.

The supporting projecting portion 13 projects from the formed surface portion 12 towards the other axial end (which is situated to face the joint 2) of the nozzle holder 3. The supporting projecting portion 13 is provided at a radially central portion of the formed surface portion 12 which is situated radially inwards of the plurality of communication holes 12a.

A coil spring 14 is disposed in the interior of the base portion 10 of the nozzle holder 3. The coil spring 14 is a compression coil spring. An end portion of the coil spring 14 is fitted on an outer circumferential portion of the supporting projecting portion 13 to thereby be supported thereon. An outside diameter of the coil spring 14 is made smaller than a bore diameter of the base portion 10. This produces a substantially cylindrical space between an outer circumference of the coil spring 14 and an inner circumferential surface of the base portion 10, and this space is made into the holder flow path 10a.

The valve 15 is attached to the other end portion of the coil spring 14. The valve 15 has an inserted portion 16 which extends in an axial direction of the coil spring 14 and an opening and closing portion 17 which is provided so as to be continuous to an axial end portion of the inserted portion 16.

The end portion of the coil spring 14 is fixed to the supporting projecting portion 13. The valve 15, which is provided so as to move in the interior of the nozzle holder 3, is attached to the other end portion of the coil spring 14. When the coil spring 14 extends or contracts, the other end portion of the coil spring 14 moves relative to the end portion of the coil spring 14 which is supported on the supporting projecting portion 13. The valve 15 moves in the axial direction as the other end portion of the coil spring 14 moves.

A flange portion 17a is provided on the opening and closing portion 17 so as to project further outwards than the inserted portion 16. A guiding surface 17b is formed on an outer circumferential portion of the opening and closing portion 17 so as to be inclined so that a diameter decreases as it moves away from the inserted portion 16.

The valve 15 is attached to the coil spring 14 by the inserted portion 16 of the valve 15 being inserted into an interior of the other end portion of the coil spring 14. The flange portion 17a of the valve 15 is pressed against the other end of the coil spring 14.

As shown in Fig. 3, when no external force is applied to the coil spring 14 which is disposed in the interior of the base portion 10, the coil spring 14 extends, whereby the coil spring 14 pushes the valve 15 towards the joint 2. Then, substantially the whole of the valve 15 is inserted into the inserting space 7b in the joint 2, and the opening and closing portion 17 is pressed against the inner flange portion 8, whereby the outlet port 9 is closed.

As shown in Figs. 2 and 3, the nozzle 4 has a main body portion 18 having an outer circumferential surface which is formed into a spherical shape, and a flowing space 18a is formed in an interior of the main body portion 18. A discharge port 18b is formed in the main body portion 18 so as to communicate with the flowing space 18a.

The nozzle 4 is press fitted in the interior of the holding portion 11 of the nozzle holder 3. The nozzle 4 is supported in the holding portion 11 so as to rotate in an arbitrary direction relative to the holding portion 11.

An end portion of a supply pipe 19 is connected to the joint 2 so as to supply a washing fluid thereto. The other end portion of the supply pipe 19 is connected to a supply tank, not shown, where a washing fluid is reserved.

As shown in Fig. 1, in the washer 1 of this embodiment, a collar 20 is attached to an outer circumferential surface of a part of the nozzle holder 3. The washer 1 is attached to a vehicle body 100 or a bumper by the collar 20 being fastened by an attaching plate spring 21. With the washer 1 attached to the vehicle body 100 or the bumper, at least part of the nozzle 4 is left projecting outwards from a through hole 100a formed in the vehicle body 100 or the bumper. A nozzle cover 22 is attached to the nozzle 4.

In the washer 1 configured in the way described heretofore, when a washing fluid is supplied from the supply tank to the flow path 2a in the joint 2 by way of the supply line 19, a pressure of the washing fluid is applied to the opening and closing portion 17 of the valve 15.

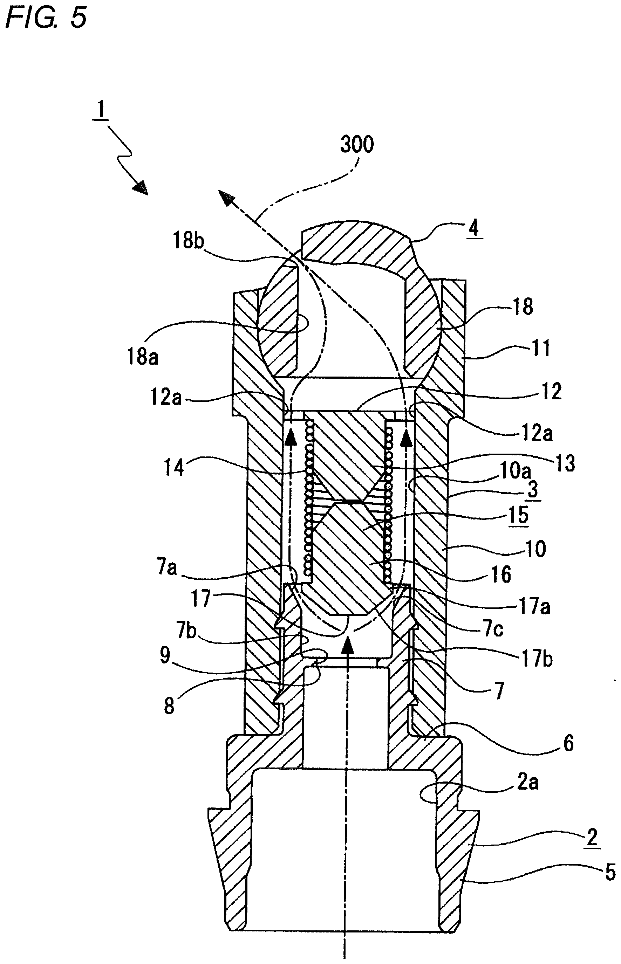

As shown in Fig. 5, when the pressure of the washing fluid is applied to the opening and closing portion 17, a pressure of the washing fluid in the flow path 2a is increased by the washing fluid supplied. Then, the coil spring 14 is compressed, and the valve 15 is moved together with the coil spring 14, whereby the outlet port 9 is opened.

When the outlet port 9 is opened and the flange portion 17a of the valve 15 moves further towards the nozzle 4 than a lower end of the guiding surface 7a of the joint 2, the washing fluid is guided by not only the guiding surface 17a of the valve 15 but also the guiding surface 7a of the joint 2 to thereby be let out from the outlet port 9 into the holder flow path 10a which is situated on an outer circumferential side of the coil spring 14. The washing fluid flows in the holder flow path 10a into the flowing space 18a in the nozzle 4 after passing through the communication holes 12a and is then jetted from the discharge port 18b towards a cover 201 of a vehicle lamp 200. Then, the cover 201 is washed with the washing fluid so jetted.

When the supply of the washing fluid from the supply tank is stopped, the pressure of the washing fluid in the flow path 2a decreases, and the coil spring 14 is allowed to extend. The valve 15 moves together with the other end portion of the coil spring 14, and the opening and closing portion 17 is pressed against the inner flange portion 8 to thereby close the outlet port 9, whereby the jetting of the washing fluid from the nozzle 4 is stopped.

Thus, as has been described heretofore, in the washer 1, the washing fluid supplied to the nozzle holder 3 flows through the holder flow path 10a which is formed outside the coil spring 14 inside the nozzle holder 3 and is then jetted from the discharge port 18 of the nozzle 4.

According to the washer 1 of this embodiment, the space is easily secured between the inner circumferential surface of the nozzle holder 3 and the coil spring 14, whereby a large cross-sectional area can easily be secured in the holder flow path 10a. This makes it difficult for a resisting force to be applied to the washing fluid by a space with a small cross-sectional area. Additionally, since the washing fluid flows on an outer side of the coil spring 14, no resisting force is applied to the washing fluid by the coil spring 14. It is difficult from these reasons that a pressure loss is generated in the washing fluid which flows in the washer 1, whereby the washing fluid can be jetted from the nozzle 4 at a high jetting pressure.

Additionally, the communication holes 12a are formed in the nozzle holder 3 so as to communicate with the holder flow path 10a so that the washing fluid is allowed to flow from the holder flow path 10a towards the nozzle 4.

Consequently, since the washing fluid flows through the holder flow path 10a to be jetted from the nozzle 4 in an ensured fashion, the flowing resistance against the washing fluid which flows through the interior of the nozzle holder 3 can be reduced in an ensured fashion.

Further, the plurality of communication holes 12a are each formed into the arc shape and are spaced apart from each other in the circumferential direction. This enables the flow rate of the washing fluid and the pressure of the washing fluid in the nozzle holder 3 to be made uniform, whereby the washing fluid can flow and be jetted stably.

Further, since the guiding surface 17b is formed on the valve 15 which guides the washing fluid into the holder flow path 10a, the construction of the washer 1 can be simplified without involving an increase in the number of parts in a secured fashion, whereby the washing fluid is allowed to flow into the holder flow path 10a in an ensured fashion.

On top of this, since the guiding surface 7a is formed on the joint 2 which guides the washing fluid into the holder flow path 10a, the construction of the washer 1 can be simplified without involving an increase in the number of parts in a secured fashion, whereby the washing fluid is allowed to flow into the holder flow path 10a in an ensured fashion.

Incidentally, in the washer like those described in Patent Document 1 and Patent Document 2 in which the coil spring is compressed to move the valve so as to open or close the outlet port, there may be fears that the following drawback is caused depending upon the size of the cross-sectional area of the flow path.

For example, in the case of a flow path with a large cross-sectional area, when the outlet port is opened by the valve, the pressure of the washing fluid is reduced, allowing the coil spring to extend to close the outlet port, and when the pressure of the washing fluid is increased again, allowing the coil spring to be compressed to open the outlet port. In this way, the coil spring is compressed to contract and is released to extend alternately to reciprocate the valve, causing so-called chattering. Consequently, the outlet port is kept open in an unstable fashion, whereby the jetting state of the washing fluid becomes unstable.

On the other hand, in the case of a flow path with a small cross-sectional area, the flowing resistance against the washing fluid becomes large, causing a pressure loss, whereby the required jetting pressure and jetting quantity of the washing fluid which is jetted from the nozzle are not secured, and the washing capability of the washing fluid is reduced.

Then, the washer of this embodiment can also stabilize the flowing state of the washing fluid.

In the washer which is configured in the way described above, when the washing fluid is supplied from the supply tank to the flow path 2a in the joint 2 by way of the supply pipe 19, the pressure of the washing fluid supplied is applied to the opening and closing portion 17 of the valve 15.

As shown in Fig. 5, when the pressure of the washing fluid is applied to the opening and closing portion 17, the pressure of the washing fluid in the flow path 2a is increased by the supplied washing fluid. Then, the coil spring 14 is compressed, and the valve 15 moves together with the coil spring 14 to thereby open the outlet port 9. When the valve 15 moves to open the outlet port 9 and the flange portion 17a of the valve 15 moves further towards the nozzle 4 than the lower end of the guiding surface 7a of the joint 2, the valve flow path 7c is formed between the guiding surface 17b of the valve 15 and the guiding surface 7a of the joint 2.

When the valve flow path 7c is formed, the washing fluid which has passed through the outlet port 9 flows the valve flow path 7c and is guided by not only the guiding surface 15a of the valve 15 but also the guiding surface 7a of the joint 2, flowing through the holder flow path 10a which is situated on the outer circumferential side of the coil spring 14. The washing fluid which has flowed through the holder flow path 10a passes through the communication holes 12a to flow into the flowing space 18a in the nozzle 4 to be jetted from the discharge port 18b towards the cover 201 of the vehicle lamp 200. The cover 201 is washed with the jetted washing fluid.

When the outlet port 9 is opened, allowing the washing fluid to flow in the valve flow path 7c in the way described above, since the cross-sectional area of the valve flow path 7c is smaller than that of the holder flow path 10a, the flow rate of the washing fluid which flows through the valve flow path 7c becomes fast, increasing the pressure of the washing fluid. This makes it easy to maintain the compressed state of the coil spring 14 by the washing fluid which flows through the valve flow path 7c, and the valve 15 is held in a predetermined position, whereby the outlet port 9 is easily kept open.

In addition, when the washing fluid flows through the holder flow path 10a by way of the valve flow path 7c, the cross-sectional area of the holder flow path 10a is greater than that of the valve flow path 7c. Because of this, the flowing resistance against the washing fluid which flows through the holder flow path 10a becomes small, and hence, it is difficult for a pressure loss to be produced. This enables the washing fluid to be jetted from the discharge port 18b of the nozzle 4 at a sufficient jetting pressure and in a sufficient jetting quantity.

In the washer 1, since the valve 15 is held in the boundary position between the valve flow path 7c and the holder flow path 10a, it becomes difficult for a vertical movement of the valve 15 or chattering to be generated. The cross-sectional area of the valve flow path 7c can be secured stably, and the cross-sectional area of the holder flow path 10a can be secured stably. This can secure the sufficient jetting pressure and jetting quantity of the washing fluid which is jetted from the nozzle 4.

Additionally, since the guiding surface 7a and the guiding surface 17b are positioned at the boundary portion between the valve flow path 7c and the holder flow path 10a, the change in cross-sectional area of the flow path between the valve flow path 7c and the holder flow path 10 becomes moderate. Consequently, since the change in flow rate when the washing fluid flows from the valve flow path 7c to the holder flow path 10a becomes moderate, the valve 15 can be held in the predetermined position stably when the washing fluid flows.

When the supply of the washing fluid from the supply tank is stopped, the pressure of the washing fluid in the flow path 2a is reduced, whereby the coil spring 14 is allowed to extend, and the valve 15 moves together with the coil spring 14. This presses the opening and closing portion 17 against the inner flange portion 8 to thereby close the outlet port 9, whereby the jetting of the washing fluid from the nozzle 4 is stopped.

Thus, as has been described heretofore, in the washer 1, the cross-sectional area of the valve flow path 7a which is formed when the outlet port 9 is opened is made greater than the cross-sectional area of the holder flow path 10a which is formed on the outer side of the coil spring 14.

Consequently, the pressure of the washing fluid in the valve flow path 7c is secured high, whereby the outlet port 9 is easy to be kept open. Additionally, the flowing resistance against the washing fluid in the holder flow path 10a becomes small, whereby the jetting pressure and jetting quantity of the washing fluid which is jetted from the nozzle 4 are easy to be secured at the sufficient levels. This enables the washing fluid to flow in a stable fashion.

In addition, the cross-sectional area of the valve flow path 7c is made smaller than the cross-sectional area of the holder flow path 10a by the amount corresponding to the thickness of the second annular portion 7 of the joint 2.

Consequently, the cross-sectional area of the valve flow path 7c can be made to differ from the cross-sectional area of the holder flow path 10a without involving an increase in the number of parts, whereby the washing fluid is allowed to flow stably while the simplified construction of the washer 1 is secured.

Further, the guiding surface 7a is formed on the joint 2 in such a way as to be inclined from the outer circumferential side towards the downstream side in the flowing direction of the washing fluid so that the washing fluid is guided from the valve flow path 7c to the holder flow path 10a.

Consequently, the washing fluid is allowed to flow stably in the holder flow path 10a while the simplified construction of the washer 1 is secured. Further, since the guiding surface 7a is formed into the inclined shape, it is difficult for a vortex flow of the washing fluid to be generated in the vicinity of the guiding surface 7a, thereby making it possible to secure the improved flow of the washing fluid.

In this embodiment, while the inclined guiding surface 7a is described as being formed at the distal end portion of the joint 2, the distal end portion of the joint 2 does not necessarily have to formed into the inclined shape, and therefore, for example, the second annular portion 7 may be formed into a shape with a constant thickness.

Further, since the guiding surface 17b is formed on the valve 15 which guides the washing fluid into the holder flow path 10a, the washing fluid is allowed to flow through the holder flow path 10a in an ensured fashion while the simplified construction of the washer 1 is secured without involving an increase in the number of parts.

In the washer 1, the washing fluid flows through the holder flow path 10a which is formed on the outer circumferential side of the coil spring 14 to be jetted from the discharge port 18b of the nozzle 4.

Consequently, since no resisting force is applied from the coil spring 14 to the washing fluid, it is difficult for a pressure loss to be generated, thereby making it possible to secure the high jetting pressure at which the washing fluid is jetted from the nozzle 4.

The shapes and constructions of the portions described in the best mode for carrying out the invention are all only examples which are taken in carrying out the invention, and therefore, the technical scope of the invention should not be construed as being limited thereby.

This patent application is based on the Japanese Patent Application No. 2012-282386 fined on December 26, 2012 and the Japanese Patent Application No. 2012-282387 filed on December 26, 2012.

### Description of Reference Numerals

1 washer; 2 joint; 2a flow path; 3 nozzle holder; 4 nozzle; 7a guiding surface; 7c valve flow path; 9 outlet port; 10a holder flow path; 12a communication hole; 14 coil spring; 15 valve; 17b guiding surface; 18b discharge port; 200 vehicle lamp; 300 washing fluid.

## Claims

1. A vehicle washer (1) comprising:
a joint (2) having a flow path (2a) through which a washing fluid (300) supplied from a supply tank and an outlet port (9) from which the washing fluid (300) is let out;
a nozzle holder (3) that the joint (2) is connected and then the washing fluid (300) which is let out from the outlet port (9) of the joint (2) flows in the interior of the nozzle holder (3);
a coil spring (14) which is disposed in an interior of the nozzle holder (3) and which is compressed in a direction in which the washing fluid (300) flows;
a nozzle (4) which has a discharge port (18b) from which the washing fluid (300) is discharged to an exterior and which is held by the nozzle holder (3); and
a valve (15) which is attached to the coil spring (14) and which moves together with the coil spring (14) to open and close the outlet port (9) of the joint (2), wherein
a holder flow path (10a) through which the washing fluid (300) flows is formed on an outer side of the coil spring (14) in the interior of the nozzle holder (3),
**characterized in that** a plurality of communication holes (12a), which are connected to the holder flow path (10a) to cause the washing fluid to flow from the holder flow path (10a) towards the nozzle (4), is formed in the nozzle holder (3), whereby the communication holes (12a) are formed into an arc shape and are positioned apart from each other in a circumferential direction.

2. The vehicle washer (1) according to Claim 1, wherein
a guiding surface (17b) is formed on the valve (15) so as to guide the washing fluid (300) into the holder flow path (10a).

3. The vehicle washer (1) according to Claims 1 or 2, wherein
a guiding surface (7a) is formed on the joint (2) so as to guide the washing fluid (300) into the holder flow path (10a).

4. The vehicle washer (1) according to Claim 1, wherein
a valve flow path (7c) through which the washing fluid (300) flows is formed outside the valve when the valve moves to open the outlet port, and a holder flow path (10a) is formed in an interior of the nozzle holder (3) which continues to the valve flow path (7c) and through which the washing fluid (300) flows to the nozzle (4), and a cross-sectional area of the washing fluid (300) in the holder flow path (10a) is made greater than a cross-sectional area of the valve flow path (7c).

5. The vehicle washer (1) according to Claim 4, wherein
the valve flow path (7c) is formed in an interior of the joint (2), and wherein
the cross-sectional areas of the valve flow path (7c) and the holder flow path (10a) are made to differ in size from each other by a thickness of the joint(2).

6. The vehicle washer (1) according to Claim 4 or 5, wherein
a guiding surface (7a) is formed on the joint (2) which is inclined to an outer circumferential side towards a downstream side in a direction in which the washing fluid (300) flows so as to guide the washing fluid (300) from the valve flow path (7c) to the holder flow path (10a).

7. The vehicle washer (1) according to anyone of Claims 4 to 6, wherein
a guiding surface (17b) is formed on the valve (15) so as to guide the washing fluid (300) from the valve flow path (7c) to the holder flow path (10a).

## Patentansprüche

1. Fahrzeugwaschvorrichtung (1), umfassend:
ein Verbindungsstück (2) mit einem Durchlauf (2a), durch den ein von einem Vorratsbehälter zugeführtes Waschfluid (300), und einer Auslassöffnung (9), aus der das Waschfluid (300) ausgelassen wird;
einen Düsenhalter (3), dass das Verbindungsstück (2) verbunden ist und wobei dann das Waschfluid (300), das aus der Auslassöffnung (9) des Verbindungsstücks (2) ausgelassen wird, im Innenbereich des Düsenhalters (3) fließt;
eine Schraubenfeder (14), die in einem Innenbereich des Düsenhalters (3) angeordnet ist und die in einer Richtung, in der das Waschfluid (300) fließt, zusammengedrückt wird;
eine Düse (4), die einen Druckstutzen (18b) aufweist, aus dem das Waschfluid (300) in einen Außenbereich ausgestoßen wird, und die vom Düsenhalter (3) gehalten wird; und
ein Ventil (15), das an der Schraubenfeder (14) befestigt ist und das sich zusammen mit der Schraubenfeder (14) bewegt, um die Auslassöffnung (9) des Verbindungsstücks (2) zu öffnen und zu schließen, wobei
ein Halterdurchlauf (10a), durch den das Waschfluid (300) fließt, auf einer Außenseite der Schraubenfeder (14) im Innenbereich des Düsenhalters (3) ausgebildet ist,
**dadurch gekennzeichnet, dass** eine Vielzahl von Verbindungslöchern (12a), die mit dem Halterdurchlauf (10a) verbunden sind, um zu bewirken, dass das Waschfluid vom Halterdurchlauf (10a) zur Düse (4) fließt, im Düsenhalter (3) ausgebildet ist, wobei die Verbindungslöcher (12a) in eine Bogenform ausgeformt sind und in einer Umfangsrichtung voneinander beabstandet positioniert sind.

2. Fahrzeugwaschvorrichtung (1) nach Anspruch 1, wobei
eine Führungsfläche (17b) auf dem Ventil (15) ausgebildet ist, um das Waschfluid (300) in den Halterdurchlauf (10a) zu führen.

3. Fahrzeugwaschvorrichtung (1) nach Anspruch 1 oder 2, wobei
eine Führungsfläche (7a) auf dem Verbindungsstück (2) ausgebildet ist, um das Waschfluid (300) in den Halterdurchlauf (10a) zu führen.

4. Fahrzeugwaschvorrichtung (1) nach Anspruch 1, wobei
ein Ventildurchlauf (7c), durch den das Waschfluid (300) fließt, außerhalb des Ventils ausgebildet ist, wenn sich das Ventil bewegt, um die Auslassöffnung zu öffnen, und ein Halterdurchlauf (10a) in einem Innenbereich des Düsenhalters (3) ausgebildet ist, der sich zum Ventildurchlauf (7c) fortsetzt und durch den das Waschfluid (300) zu der Düse (4) fließt, und eine Querschnittsfläche des Waschfluids (300) im Halterdurchlauf (10a) größer als eine Querschnittsfläche des Ventildurchlaufs (7c) gemacht wird.

5. Fahrzeugwaschvorrichtung (1) nach Anspruch 4, wobei
der Ventildurchlauf (7c) in einem Innenbereich des Verbindungsstücks (2) ausgebildet ist, und wobei
die Querschnittsflächen des Ventildurchlaufs (7c) und des Halterdurchlaufs (10a) so gemacht werden, dass sie sich in ihrer Größe um eine Dicke des Verbindungsstücks (2) voneinander unterscheiden.

6. Fahrzeugwaschvorrichtung (1) nach Anspruch 4 oder 5, wobei
eine Führungsfläche (7a) auf dem Verbindungsstück (2) ausgebildet ist, die in einer Richtung, in der das Waschfluid (300) fließt, hin zu einer Abströmseite zu einer Außenumfangsseite hin geneigt ist, um das Waschfluid (300) vom Ventildurchlauf (7c) zum Halterdurchlauf (10a) zu führen.

7. Fahrzeugwaschvorrichtung (1) nach einem der Ansprüche 4 bis 6, wobei
eine Führungsfläche (17b) auf dem Ventil (15) ausgebildet ist, um das Waschfluid (300) vom Ventildurchlauf (7c) zum Halterdurchlauf (10a) zu führen.

## Revendications

1. Dispositif de lavage pour véhicule (1) comprenant :
un joint (2) ayant un passage d'écoulement (2a) par lequel un fluide de lavage (300) provenant d'un réservoir d'alimentation et un orifice de sortie (9) par lequel le fluide de lavage (300) peut sortir ;
un support de buse (3) est raccordé le joint (2) et ensuite le fluide de lavage (300) qui sort de l'orifice de sortie (9) du joint (2) s'écoule à l'intérieur du support de buse (3) ;
un ressort hélicoïdal (14) qui est disposé à l'intérieur du support de buse (3) et qui est comprimé dans une direction dans laquelle s'écoule le fluide de lavage (300) ;
une buse (4) qui comporte un orifice d'évacuation (18b) par lequel le fluide de lavage (300) est évacué vers l'extérieur et qui est maintenue par le support de buse (3) ; et
une soupape (15) qui est fixée au ressort hélicoïdal (14) et qui se déplace ensemble avec le ressort hélicoïdal (14) pour ouvrir et fermer l'orifice de sortie (9) du joint (2), dans lequel,
un passage d'écoulement de support (10a) par lequel s'écoule le fluide de lavage (300) est formé sur un côté extérieur du ressort hélicoïdal (14) à l'intérieur du support de buse (3),
**caractérisé en ce que** plusieurs orifices de communication (12a) sont reliés au passage d'écoulement de support (10a) pour faire s'écouler le fluide de lavage du passage d'écoulement de support (10a) vers la buse (4) dans le support de buse (3), de sorte que les orifices de communication (12a) sont formés en forme d'arc et sont positionnés séparément les uns des autres dans une direction circonférentielle.

2. Dispositif de lavage pour véhicule (1) selon la revendication 1, dans lequel
une surface de guidage (17b) est formée sur la soupape (15) de manière à guider le fluide de lavage (300) dans le passage d'écoulement de support (10a).

3. Dispositif de lavage pour véhicule (1) selon les revendications 1 ou 2, dans lequel
une surface de guidage (7a) est formée sur le joint (2) de manière à guider le fluide de lavage (300) dans le passage d'écoulement du support (10a).

4. Dispositif de lavage pour véhicule (1) selon la revendication 1, dans lequel
un passage d'écoulement de soupape (7c) par lequel s'écoule le fluide de lavage (300) est formé à l'extérieur de la soupape lorsque la soupape se déplace pour ouvrir l'orifice de sortie, et un passage d'écoulement de support (10a) est formé à l'intérieur du support de buse (3) qui continue jusqu'au passage d'écoulement de la soupape (7c) et par lequel le fluide de lavage (300) s'écoule vers la buse (4), et une section transversale du fluide de lavage (300) dans le passage d'écoulement du support (10a) est réalisée plus grande que la section transversale du passage d'écoulement de soupape (7c).

5. Dispositif de lavage pour véhicule (1) selon la revendication 4, dans lequel
le passage d'écoulement de soupape (7c) est formé à l'intérieur du joint (2), et dans lequel
les sections transversales du passage d'écoulement de soupape (7c) et du passage d'écoulement de support (10a) sont amenées à différer en taille l'une par rapport à l'autre d'une épaisseur du joint (2).

6. Dispositif de lavage pour véhicule (1) selon la revendication 4 ou 5, dans lequel
une surface de guidage (7a) est formée sur le joint (2) qui est incliné vers un côté circonférentiel externe vers un côté aval dans une direction dans laquelle le fluide de lavage (300) s'écoule de manière à guider le fluide de lavage (300) du passage d'écoulement de soupape (7c) vers le passage d'écoulement de support (10a).

7. Dispositif de lavage pour véhicule (1) selon l'une quelconque des revendications 4 à 6, dans lequel
une surface de guidage (17b) est formée sur la soupape (15) afin de guider le fluide de lavage (300) depuis le passage d'écoulement de soupape (7c) vers le passage d'écoulement de support (10a).
